# EUROPEAN PATENT APPLICATION

(11) **EP 4 836 280 A1**
(43) Date of publication of application: **04.11.2026**
(21) Application number: 26174772.9
(22) Date of filing: 27.04.2026
(51) Int. Cl.: H02M 7/487, H02M 1/00, H02M 1/32

(54) **POWER CONVERSION APPARATUS**

(30) Priority: 29.04.2025 CN 202510574402
(71) Applicant: HUAWEI TECHNOLOGIES CO., LTD., Shenzhen 518129 (CN)
(72) Inventor: Li, Junjie, 518129 Shenzhen (CN); Yu, Xinyu, 518129 Shenzhen (CN); Xin, Kai, 518129 Shenzhen (CN); Cao, Li, 518129 Shenzhen (CN)
(74) Representative: Epping - Hermann - Fischer

(57) **Abstract**

Embodiments of this application disclose a power conversion apparatus, and relate to the field of power electronics, to resolve a problem of how to improve efficiency and reliability of a switching transistor in a power conversion circuit by a controller. The controller is configured to: when an absolute value of an instantaneous voltage between a bus midpoint and an alternating current end is greater than or equal to a voltage threshold and an absolute value of an instantaneous current of the alternating current end is greater than or equal to a current threshold, if the instantaneous voltage is greater than or equal to zero and the instantaneous current is greater than or equal to zero, control a first switching transistor to be periodically turned on, and control a third switching transistor to remain in an off state; or if the instantaneous voltage is less than or equal to zero and the instantaneous current is less than or equal to zero, control a fourth switching transistor to be periodically turned on, and control a second switching transistor to remain in an off state.

## Description

### TECHNICAL FIELD

This application relates to the field of power electronics, and in particular, to a power conversion apparatus.

### BACKGROUND

As power and voltage levels of an inverter circuit increase, a multi-level inverter circuit is widely used in new energy fields such as photovoltaic, wind power, and direct current transmission. The multi-level inverter circuit includes a three-level inverter circuit or a five-level inverter circuit, and the multi-level inverter circuit may be referred to as a power conversion circuit. The three-level inverter circuit is used as an example. An output voltage of the three-level inverter circuit includes a positive level, a negative level, and a zero level. Types of the three-level inverter circuit include an active neutral point clamped (ANPC) three-level inverter circuit, a diode-neutral-point-clamped (DNPC) three-level inverter circuit, and a T-shaped three-level inverter circuit. The DNPC three-level inverter circuit may also be referred to as an NPC three-level inverter circuit.

For example, a power conversion apparatus includes a controller and an ANPC three-level inverter circuit. The controller controls switching transistors in the ANPC three-level inverter circuit to be alternately turned on, to convert a direct current into an alternating current, or convert an alternating current into a direct current, thereby avoiding a shoot-through short circuit between a positive direct current bus and a negative direct current bus.

However, when the controller controls the switching transistors in the ANPC three-level inverter circuit to be alternately turned on, a current may flow through a diode reversely connected in parallel to the turned-on switching transistor, and no current may flow through the turned-on switching transistor. A switching loss caused by the controller controlling the switching transistor to be turned on and turned off causes a decrease in efficiency of the switching transistor in the power conversion circuit. In addition, when a switching transistor that is in the ANPC three-level inverter circuit and that is connected to the direct current bus fails due to short-circuiting, the controller controls a switching transistor that corresponds to the short-circuited switching transistor and that is alternately turned on with the short-circuited switching transistor to be turned on, and the positive direct current bus or the negative direct current bus is short-circuited, resulting in a safety accident. Therefore, how to improve efficiency and reliability of the switching transistor in the power conversion circuit by the controller becomes an urgent problem to be resolved.

### SUMMARY

Embodiments of this application provide a power conversion apparatus, which includes a low-loss and highly reliable switching transistor in a power conversion circuit.

A first aspect of embodiments of this application provides a power conversion apparatus, including a positive direct current bus, a negative direct current bus, a positive bus capacitor and a negative bus capacitor, where the positive bus capacitor and the negative bus capacitor are connected in series between the positive direct current bus and the negative direct current bus, and a series connection point of the positive bus capacitor and the negative bus capacitor is a bus midpoint; and a power conversion circuit, including a first switching transistor, a second switching transistor, a third switching transistor, a fourth switching transistor, a first diode, and a second diode, where the first switching transistor, the second switching transistor, the third switching transistor, and the fourth switching transistor are connected in series between the positive direct current bus and the negative direct current bus, a cathode of the first diode is connected to a series connection point of the first switching transistor and the second switching transistor, an anode of the second diode is connected to a series connection point of the third switching transistor and the fourth switching transistor, an anode of the first diode and a cathode of the second diode are connected to the bus midpoint, a series connection point of the second switching transistor and the third switching transistor is an alternating current end of the power conversion circuit, and the alternating current end is configured to connect to a power grid or load. The power conversion circuit is configured to convert a direct current output by a photovoltaic module or an energy storage battery into an alternating current.

A controller is configured to: control the first switching transistor and the third switching transistor to be alternately turned on, control the second switching transistor to remain on, and control the fourth switching transistor to remain off, for an instantaneous voltage between the bus midpoint and the alternating current end to be greater than zero; or control the second switching transistor and the fourth switching transistor to be alternately turned on, control the third switching transistor to remain on, and control the first switching transistor to remain off, for an instantaneous voltage between the bus midpoint and the alternating current end to be less than zero.

The controller is further configured to: when an absolute value of the instantaneous voltage between the bus midpoint and the alternating current end is greater than or equal to a voltage threshold and an absolute value of an instantaneous current of the alternating current end is greater than or equal to a current threshold, if the instantaneous voltage is greater than or equal to zero and the instantaneous current is greater than or equal to zero, control the first switching transistor to be periodically turned on, and control the third switching transistor to remain in an off state; or if the instantaneous voltage is less than or equal to zero and the instantaneous current is less than or equal to zero, control the fourth switching transistor to be periodically turned on, and control the second switching transistor to remain in an off state; or if the instantaneous voltage is greater than or equal to zero and the instantaneous current is less than or equal to zero, control the third switching transistor to be periodically turned on, and control the first switching transistor to remain in an off state; or if the instantaneous voltage is less than or equal to zero and the instantaneous current is greater than or equal to zero, control the second switching transistor to be periodically turned on, and control the fourth switching transistor to remain in an off state.

That the instantaneous current of the alternating current end is greater than zero means that a current flows from the alternating current end to the power grid or load, and that the instantaneous current of the alternating current end is less than zero means that the current flows from the power grid or load to the alternating current end.

In the conventional technology, the controller determines a drive waveform based on a modulation wave and a triangular carrier, and then controls the power conversion circuit based on the drive waveform. Because a current of the alternating current end of the power conversion circuit has a ripple, zero crossing may occur a plurality of times in the current of the alternating current end near a switching point of a positive half cycle and a negative half cycle of the modulation wave or near a switching point of a negative half cycle and a positive half cycle of the modulation wave, and a direction of the current of the alternating current end may change a plurality of times. In this process, both the absolute value of the instantaneous voltage between the bus midpoint and the alternating current end and the absolute value of the instantaneous current of the alternating current end are small. In this solution relative to a drive manner of the power conversion circuit in the conventional technology, the first switching transistor and the third switching transistor are used as an example. When the absolute value of the instantaneous voltage between the bus midpoint and the alternating current end is greater than or equal to the voltage threshold, the absolute value of the instantaneous current of the alternating current end is greater than or equal to the current threshold, and the controller determines that a current direction in the power conversion circuit does not suddenly change, if the instantaneous voltage is greater than or equal to zero and the instantaneous current is greater than or equal to zero, the power conversion circuit is in an inversion working state, and the current flows from the alternating current end to the power grid or load through an inductor. The controller controls the first switching transistor to be periodically turned on, and controls the third switching transistor to remain in an off state. When the first switching transistor is turned off, freewheeling is performed via the first diode and the second switching transistor. This can reduce a switching loss caused by the controller controlling the third switching transistor to be turned on and turned off, and improve efficiency of the switching transistor in the power conversion circuit. In addition, if the first switching transistor is short-circuited, because the controller controls the third switching transistor to remain in the off state, there is no shoot-through short circuit between the positive direct current bus and the bus midpoint. This can improve reliability of the switching transistor in the power conversion circuit. In addition, when the instantaneous voltage between the bus midpoint and the alternating current end is less than the voltage threshold and the absolute value of the instantaneous current of the alternating current end is less than the current threshold, the controller does not control the third switching transistor to be turned off. Therefore, when the current direction in the power conversion apparatus suddenly changes from the power grid or load to the alternating current end through the inductor, and the power conversion circuit is in a rectification working state or in a reactive power support state, the current may flow from the alternating current end to the bus midpoint through the third switching transistor, and the current in the power conversion circuit is not distorted.

With reference to the first aspect, in an implementation, the voltage threshold is 10% of an absolute value of a peak voltage between the bus midpoint and the alternating current end.

With reference to the first aspect, in an implementation, the voltage threshold or the current threshold is positively correlated with at least one of a direct current bus voltage, a total harmonic distortion of an output current of the power conversion circuit, or an output power of the power conversion circuit, and the direct current bus voltage is a voltage between the positive direct current bus and the negative direct current bus.

In this solution, because a higher direct current bus voltage, a higher total harmonic distortion of the output current of the power conversion circuit, or a higher output power of the power conversion circuit indicates a larger ripple in the current of the alternating current end, the voltage threshold or the current threshold is positively correlated with at least one of the direct current bus voltage, the total harmonic distortion of the output current of the power conversion circuit, or the output power of the power conversion circuit. The voltage threshold or the current threshold is adjusted based on each parameter of the power conversion apparatus. This can improve efficiency and reliability of the switching transistor in the power conversion circuit.

With reference to the first aspect, in an implementation, the voltage threshold or the current threshold is negatively correlated with a power factor or efficiency of the power conversion circuit.

In this solution, because a smaller power factor of the power conversion circuit indicates a high reactive power, a larger ripple, and lower efficiency of the power conversion circuit, and a larger ripple, the voltage threshold or the current threshold is negatively correlated with the power factor or the efficiency of the power conversion circuit. The voltage threshold or the current threshold is adjusted based on each parameter of the power conversion apparatus. This can improve efficiency and reliability of the switching transistor in the power conversion circuit.

With reference to the first aspect, in an implementation, the controller is further configured to: after controlling the first switching transistor to be periodically turned on, if the first switching transistor is short-circuited, control the third switching transistor to remain in the off state; or after controlling the fourth switching transistor to be periodically turned on, if the fourth switching transistor is short-circuited, control the second switching transistor to remain in the off state; or after controlling the third switching transistor to be periodically turned on, if the third switching transistor is short-circuited, control the first switching transistor to remain in the off state; or after controlling the second switching transistor to be periodically turned on, if the second switching transistor is short-circuited, control the fourth switching transistor to remain in the off state.

In this solution, the shoot-through short circuit between the positive direct current bus and the bus midpoint may be avoided, or a shoot-through short circuit between the bus midpoint and the negative direct current bus may be avoided. This can improve reliability of the switching transistor in the power conversion circuit.

A second aspect of embodiments of this application provides a power conversion apparatus, including a positive direct current bus, a negative direct current bus, a positive bus capacitor and a negative bus capacitor, where the positive bus capacitor and the negative bus capacitor are connected in series between the positive direct current bus and the negative direct current bus, and a series connection point of the positive bus capacitor and the negative bus capacitor is a bus midpoint; and a power conversion circuit, including a first switching transistor, a second switching transistor, a third switching transistor, a fourth switching transistor, a fifth switching transistor, and a sixth switching transistor, where the first switching transistor and the second switching transistor are connected in series between the positive direct current bus and the bus midpoint, the third switching transistor and the fourth switching transistor are connected in series between the bus midpoint and the negative direct current bus, the fifth switching transistor and the sixth switching transistor are connected in series between a series connection point of the first switching transistor and the second switching transistor and a series connection point of the third switching transistor and the fourth switching transistor, a series connection point of the second switching transistor and the third switching transistor is connected to the bus midpoint, a series connection point of the fifth switching transistor and the sixth switching transistor is an alternating current end of the power conversion circuit, and the alternating current end is configured to connect to a power grid or load. The power conversion circuit is configured to convert a direct current output by a photovoltaic module or an energy storage battery into an alternating current.

A controller is configured to: control the first switching transistor and the second switching transistor to be alternately turned on, control the third switching transistor and the fifth switching transistor to remain on, and control the fourth switching transistor and the sixth switching transistor to remain off, for an instantaneous voltage between the bus midpoint and the alternating current end to be greater than zero; or control the third switching transistor and the fourth switching transistor to be alternately turned on, control the second switching transistor and the sixth switching transistor to remain on, and control the first switching transistor and the fifth switching transistor to remain off, for an instantaneous voltage between the bus midpoint and the alternating current end to be less than zero.

The controller is further configured to: when an absolute value of the instantaneous voltage between the bus midpoint and the alternating current end is greater than or equal to a voltage threshold and an absolute value of an instantaneous current of the alternating current end is greater than or equal to a current threshold, if the instantaneous voltage is greater than or equal to zero and the instantaneous current is greater than or equal to zero, control the first switching transistor to be periodically turned on, and control the second switching transistor to remain in an off state; or if the instantaneous voltage is less than or equal to zero and the instantaneous current is less than or equal to zero, control the fourth switching transistor to be periodically turned on, and control the third switching transistor to remain in an off state; or if the instantaneous voltage is greater than or equal to zero and the instantaneous current is less than or equal to zero, control the second switching transistor to be periodically turned on, and control the first switching transistor to remain in an off state; or if the instantaneous voltage is less than or equal to zero and the instantaneous current is greater than or equal to zero, control the third switching transistor to be periodically turned on, and control the fourth switching transistor to remain in an off state.

That the instantaneous current of the alternating current end is greater than zero means that a current flows from the alternating current end to the power grid or load, and that the instantaneous current of the alternating current end is less than zero means that the current flows from the power grid or load to the alternating current end.

With reference to the second aspect, in an implementation, the voltage threshold is 10% of an absolute value of a peak voltage between the bus midpoint and the alternating current end.

With reference to the second aspect, in an implementation, the voltage threshold or the current threshold is positively correlated with at least one of a direct current bus voltage, a total harmonic distortion of an output current of the power conversion circuit, or an output power of the power conversion circuit, and the direct current bus voltage is a voltage between the positive direct current bus and the negative direct current bus.

With reference to the second aspect, in an implementation, the voltage threshold or the current threshold is negatively correlated with a power factor or efficiency of the power conversion circuit.

With reference to the second aspect, in an implementation, the controller is further configured to: after controlling the first switching transistor to be periodically turned on, if the first switching transistor is short-circuited, control the second switching transistor to remain in the off state; or after controlling the fourth switching transistor to be periodically turned on, if the fourth switching transistor is short-circuited, control the third switching transistor to remain in the off state; or after controlling the second switching transistor to be periodically turned on, if the second switching transistor is short-circuited, control the first switching transistor to remain in the off state; or after controlling the third switching transistor to be periodically turned on, if the third switching transistor is short-circuited, control the fourth switching transistor to remain in the off state.

A third aspect of embodiments of this application provides a power conversion apparatus, including a positive direct current bus, a negative direct current bus, a positive bus capacitor and a negative bus capacitor, where the positive bus capacitor and the negative bus capacitor are connected in series between the positive direct current bus and the negative direct current bus, and a series connection point of the positive bus capacitor and the negative bus capacitor is a bus midpoint; and a power conversion circuit, including a first switching transistor, a second switching transistor, a third switching transistor, and a fourth switching transistor, where the first switching transistor and the fourth switching transistor are connected in series between the positive direct current bus and the negative direct current bus, a connection point of the first switching transistor and the fourth switching transistor is an alternating current end of the power conversion circuit, the alternating current end is configured to connect to a power grid or load, an emitter or a source of the second switching transistor is connected to the alternating current end, a collector or a drain of the second switching transistor is connected to a collector or a drain of the third switching transistor, and an emitter or a source of the third switching transistor is connected to the bus midpoint. The power conversion circuit is configured to convert a direct current output by a photovoltaic module or an energy storage battery into an alternating current.

A controller is configured to: control the first switching transistor and the third switching transistor to be alternately turned on, control the second switching transistor to remain on, and control the fourth switching transistor to remain off, for an instantaneous voltage between the bus midpoint and the alternating current end to be greater than zero; or control the second switching transistor and the fourth switching transistor to be alternately turned on, control the third switching transistor to remain on, and control the first switching transistor to remain off, for an instantaneous voltage between the bus midpoint and the alternating current end to be less than zero.

The controller is further configured to: when an absolute value of the instantaneous voltage between the bus midpoint and the alternating current end is greater than or equal to a voltage threshold and an absolute value of an instantaneous current of the alternating current end is greater than or equal to a current threshold, if the instantaneous voltage is greater than or equal to zero and the instantaneous current is greater than or equal to zero, control the first switching transistor to be periodically turned on, and control the third switching transistor to remain in an off state; or if the instantaneous voltage is less than or equal to zero and the instantaneous current is less than or equal to zero, control the fourth switching transistor to be periodically turned on, and control the second switching transistor to remain in an off state; or if the instantaneous voltage is greater than or equal to zero and the instantaneous current is less than or equal to zero, control the third switching transistor to be periodically turned on, and control the first switching transistor to remain in an off state; or if the instantaneous voltage is less than or equal to zero and the instantaneous current is greater than or equal to zero, control the second switching transistor to be periodically turned on, and control the fourth switching transistor to remain in an off state.

That the instantaneous current of the alternating current end is greater than zero means that a current flows from the alternating current end to the power grid or load, and that the instantaneous current of the alternating current end is less than zero means that the current flows from the power grid or load to the alternating current end.

With reference to the third aspect, in an implementation, the voltage threshold is 10% of an absolute value of a peak voltage between the bus midpoint and the alternating current end.

With reference to the third aspect, in an implementation, the voltage threshold or the current threshold is positively correlated with at least one of a direct current bus voltage, a total harmonic distortion of an output current of the power conversion circuit, or an output power of the power conversion circuit, and the direct current bus voltage is a voltage between the positive direct current bus and the negative direct current bus.

With reference to the third aspect, in an implementation, the voltage threshold or the current threshold is negatively correlated with a power factor or efficiency of the power conversion circuit.

With reference to the third aspect, in an implementation, the controller is further configured to: after controlling the first switching transistor to be periodically turned on, if the first switching transistor is short-circuited, control the third switching transistor to remain in the off state; or after controlling the fourth switching transistor to be periodically turned on, if the fourth switching transistor is short-circuited, control the second switching transistor to remain in the off state; or after controlling the third switching transistor to be periodically turned on, if the third switching transistor is short-circuited, control the first switching transistor to remain in the off state; or after controlling the second switching transistor to be periodically turned on, if the second switching transistor is short-circuited, control the fourth switching transistor to remain in the off state.

For beneficial effect of the second aspect and the third aspect in this application, refer to analysis of beneficial effect of the first aspect. Details are not described herein again.

### BRIEF DESCRIPTION OF DRAWINGS

FIG. 1 is a diagram of a circuit topology of a photovoltaic power generation system according to an embodiment of this application;
FIG. 2 is a diagram of a circuit topology of a power conversion apparatus according to an embodiment of this application;
FIG. 3 is a diagram of a drive waveform of a DNPC three-level inverter circuit according to an embodiment of this application;
FIG. 4 is a diagram of a circuit topology of another power conversion apparatus according to an embodiment of this application;
FIG. 5 is a diagram of a drive waveform of an ANPC three-level inverter circuit according to an embodiment of this application;
FIG. 6 is a diagram of a circuit topology of still another power conversion apparatus according to an embodiment of this application;
FIG. 7 is a diagram of a drive waveform of a T-shaped three-level inverter circuit according to an embodiment of this application;
FIG. 8A to FIG. 8D are a diagram of a drive waveform of another DNPC three-level inverter circuit according to an embodiment of this application;
FIG. 9A and FIG. 9B are a diagram of a current flow direction in a power conversion apparatus according to an embodiment of this application;
FIG. 10 is a diagram of a circuit topology of yet another power conversion apparatus according to an embodiment of this application;
FIG. 11A to FIG. 11D are a diagram of a drive waveform of another ANPC three-level inverter circuit according to an embodiment of this application;
FIG. 12A and FIG. 12B are a diagram of another current flow direction in a power conversion apparatus according to an embodiment of this application;
FIG. 13A to FIG. 13D are a diagram of a drive waveform of another T-shaped three-level inverter circuit according to an embodiment of this application; and
FIG. 14A and FIG. 14B are a diagram of still another current flow direction in a power conversion apparatus according to an embodiment of this application.

### DESCRIPTION OF EMBODIMENTS

Making and using of embodiments are discussed in detail below. However, it should be understood that many applicable inventive concepts provided in this application may be implemented in a plurality of specific environments. The discussed specific embodiments are merely used to describe specific manners to implement and use this specification and this technology, and do not limit the scope of this application.

Unless otherwise defined, all technical terms used in this specification have same meanings as those commonly known to a person of ordinary skill in the art.

Circuits or other components may be described as or referred to as "configured to" perform one or more tasks. In this case, the term "configured to" is used for implying a structure by indicating that a circuit/component includes a structure (for example, a circuit system) that performs one or more tasks during operation. Therefore, even when a specified circuit/component is currently not operable (for example, not turned on), the circuit/component may also be referred to as being configured to perform the task. Circuits/components used in conjunction with the "configured to" phrase include hardware, for example, a circuit for performing an operation.

Before embodiments of this application are described, the background of this application is first described.

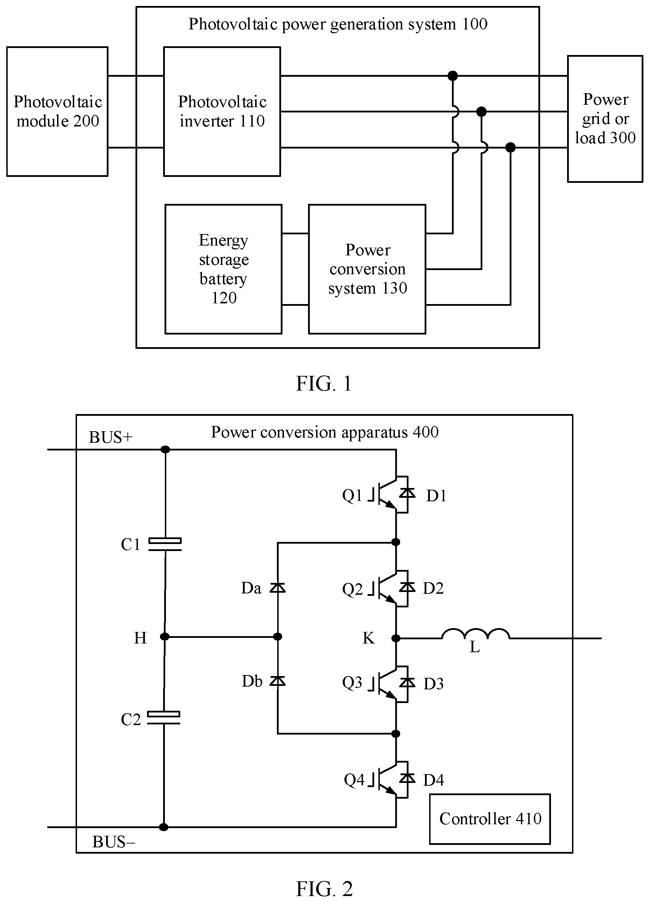

FIG. 1 is a diagram of a circuit topology of a photovoltaic power generation system 100 according to an embodiment of this application. The photovoltaic power generation system 100 includes a photovoltaic inverter 110. A direct current side of the photovoltaic inverter 110 is configured to connect to a photovoltaic module 200, and an alternating current side of the photovoltaic inverter 110 is configured to connect to a power grid or load 300. The photovoltaic module 200 is configured to convert solar energy into a direct current, and the photovoltaic inverter 110 is configured to: convert the direct current into an alternating current, and transmit the alternating current to the power grid or load 300.

In an implementation, as shown in FIG. 1, the photovoltaic power generation system 100 may further include an energy storage battery 120 and a power conversion system (PCS) 130. An electrode of the energy storage battery 120 is connected to a direct current side of the power conversion system 130, and an alternating current side of the power conversion system 130 is connected to the alternating current side of the photovoltaic inverter 110. The power conversion system 130 is configured to: convert the alternating current output by the photovoltaic inverter 110 into a direct current, or convert an alternating current provided by the power grid or load 300 into a direct current, to charge the energy storage battery 120. The power conversion system 130 is further configured to convert a direct current output by the energy storage battery 120 into an alternating current, to supply power to the power grid or load 300.

The photovoltaic inverter 110 or the power conversion system 130 may be referred to as a power conversion apparatus. The power conversion apparatus may include a multi-level inverter circuit. The multi-level inverter circuit may be referred to as a power conversion circuit. A controller in the power conversion apparatus controls switching transistors in the multi-level inverter circuit to be alternately turned on, to convert a direct current into an alternating current or convert an alternating current into a direct current, and avoid a shoot-through short circuit between a positive direct current bus and a negative direct current bus. The multi-level inverter circuit may include a three-level inverter circuit, a five-level inverter circuit, or a more-level inverter circuit. In this embodiment of this application, the three-level inverter circuit is used as an example for description.

FIG. 2 is a diagram of a circuit topology of a power conversion apparatus 400 according to an embodiment of this application. The power conversion apparatus 400 shown in FIG. 2 includes a DNPC three-level inverter circuit. The DNPC three-level inverter circuit includes a first switching transistor Q1, a second switching transistor Q2, a third switching transistor Q3, a fourth switching transistor Q4, a first diode Da, and a second diode Db. The first switching transistor Q1, the second switching transistor Q2, the third switching transistor Q3, and the fourth switching transistor Q4 are connected in series between a positive direct current bus BUS+ and a negative direct current bus BUS-. A cathode of the first diode Da is connected to a series connection point of the first switching transistor Q1 and the second switching transistor Q2, an anode of the second diode Db is connected to a series connection point of the third switching transistor Q3 and the fourth switching transistor Q4, an anode of the first diode Da and a cathode of the second diode Db are connected to a bus midpoint H, and a series connection point of the second switching transistor Q2 and the third switching transistor Q3 is an alternating current end K of the DNPC three-level inverter circuit. The alternating current end K is configured to connect to a power grid or load 300.

As shown in FIG. 2, the first switching transistor Q1 to the forth switching transistor Q4 are used as an example. The first switching transistor Q1 to the fourth switching transistor Q4 may include an IGBT. The power conversion apparatus 400 further includes a diode D1 to a diode D4 that are reversely connected in parallel to the first switching transistor Q1 to the fourth switching transistor Q4 respectively.

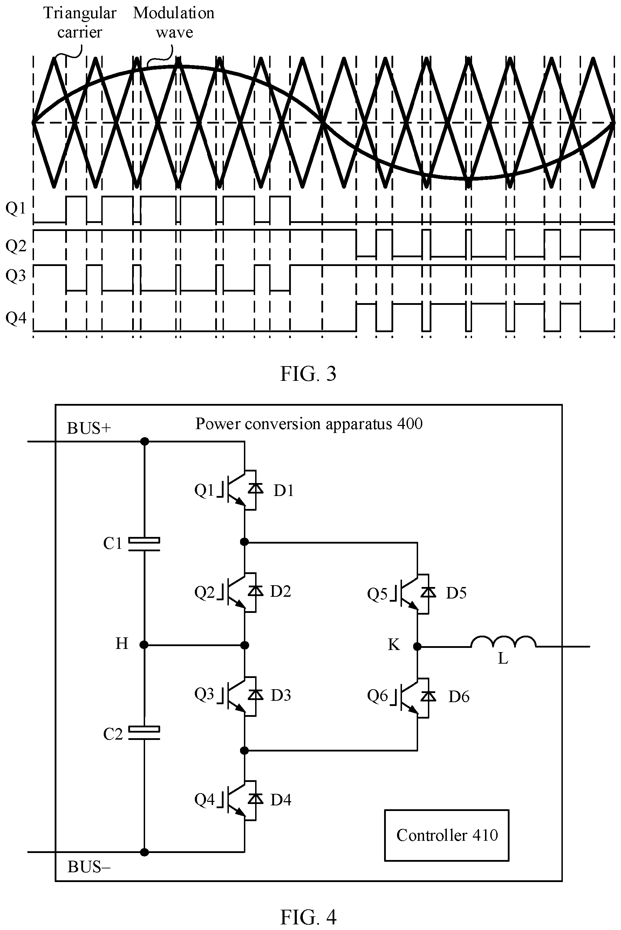

FIG. 3 is a diagram of a drive waveform of the DNPC three-level inverter circuit according to this embodiment of this application. As shown in FIG. 2, the power conversion apparatus 400 may further include a controller 410. The controller 410 is configured to: determine drive waveforms of the first switching transistor Q1 to the fourth switching transistor Q4 based on a modulation wave and a triangular carrier, and control, based on the drive waveforms, the first switching transistor Q1 to the fourth switching transistor Q4 to be turned on or turned off. Specifically, the controller 410 is configured to: control the first switching transistor Q1 and the third switching transistor Q3 to be alternately turned on, control the second switching transistor Q2 to remain on, and control the fourth switching transistor Q4 to remain off, for an instantaneous voltage between the bus midpoint H and the alternating current end K to be greater than zero; or control the second switching transistor Q2 and the fourth switching transistor Q4 to be alternately turned on, control the third switching transistor Q3 to remain on, and control the first switching transistor Q1 to remain off, for an instantaneous voltage between the bus midpoint H and the alternating current end K to be less than zero.

However, the first switching transistor Q1 and the third switching transistor Q3 are used as an example. In a positive half cycle of the modulation wave, an output current of the alternating current end K is greater than zero, and the current flows from the alternating current end K to the power grid or load 300 through an inductor L. When the first switching transistor Q1 and the third switching transistor Q3 are alternately turned on, and when the first switching transistor Q1 is turned off and the third switching transistor Q3 is turned on, the current may flow through the diode D3 reversely connected in parallel to the third switching transistor Q3 and the diode D4 reversely connected in parallel to the fourth switching transistor Q4, and no current may flow through the third switching transistor Q3. A switching loss caused by the controller 410 controlling the third switching transistor Q3 to be turned on and turned off causes a decrease in efficiency of the switching transistor in the DNPC three-level inverter circuit. In addition, if the first switching transistor Q1 fails due to short-circuiting, the controller 410 controls the third switching transistor Q3 to be turned on. As a result, there is a shoot-through short circuit between the positive direct current bus BUS+ and the bus midpoint H through the first switching transistor Q1, the second switching transistor Q2, the third switching transistor Q3, and the second diode Db, resulting in a safety accident and low reliability of the switching transistor in the DNPC three-level inverter circuit.

FIG. 4 is a diagram of a circuit topology of another power conversion apparatus 400 according to an embodiment of this application. A difference from the power conversion apparatus 400 shown in FIG. 2 lies in that the power conversion apparatus 400 includes an ANPC three-level inverter circuit. The ANPC three-level inverter circuit includes a positive direct current bus BUS+ and a negative direct current bus BUS-, where the positive direct current bus BUS+ and the negative direct current bus BUS- are configured to connect to the photovoltaic module 200; and a positive bus capacitor C1 and a negative bus capacitor C2, where the positive bus capacitor C1 and the negative bus capacitor C2 are connected in series between the positive direct current bus BUS+ and the negative direct current bus BUS-, and a series connection point of the positive bus capacitor C1 and the negative bus capacitor C2 is a bus midpoint H. The ANPC three-level inverter circuit includes a first switching transistor Q1, a second switching transistor Q2, a third switching transistor Q3, a fourth switching transistor Q4, a fifth switching transistor Q5, and a sixth switching transistor Q6. The first switching transistor Q1 and the second switching transistor Q2 are connected in series between the positive direct current bus BUS+ and the bus midpoint H. The third switching transistor Q3 and the fourth switching transistor Q4 are connected in series between the bus midpoint H and the negative direct current bus BUS-. The fifth switching transistor Q5 and the sixth switching transistor Q6 are connected in series between a series connection point of the first switching transistor Q1 and the second switching transistor Q2 and a series connection point of the third switching transistor Q3 and the fourth switching transistor Q4. A series connection point of the second switching transistor Q2 and the third switching transistor Q3 is connected to the bus midpoint H. A series connection point of the fifth switching transistor Q5 and the sixth switching transistor Q6 is an alternating current end K of the ANPC three-level inverter circuit. The alternating current end K is configured to connect to a power grid or load 300. As shown in FIG. 4, the power conversion apparatus 400 provided in this embodiment of this application further includes an inductor L. A first end of the inductor L is connected to the alternating current end K, and a second end of the inductor L is configured to connect to the power grid or load 300.

As shown in FIG. 4, the first switching transistor Q1 to the sixth switching transistor Q6 are used as an example. The first switching transistor Q1 to the sixth switching transistor Q6 may include an IGBT. The power conversion apparatus 400 further includes a diode D1 to a diode D6 that are reversely connected in parallel to the first switching transistor Q1 to the sixth switching transistor Q6 respectively.

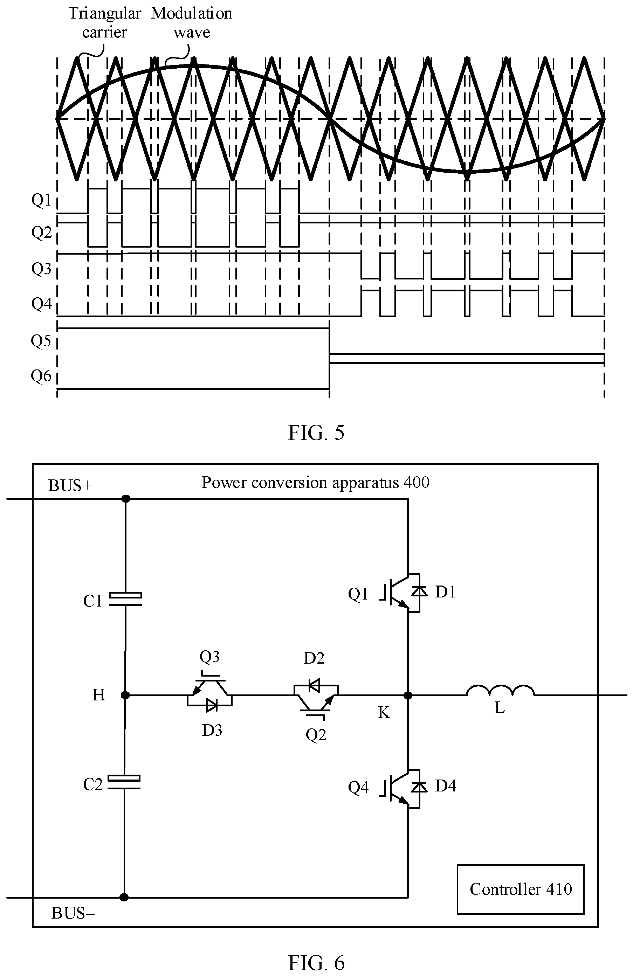

FIG. 5 is a diagram of a drive waveform of the ANPC three-level inverter circuit according to this embodiment of this application. As shown in FIG. 5, a controller 410 is configured to: determine drive waveforms of the first switching transistor Q1 to the sixth switching transistor Q6 based on a modulation wave and a triangular carrier, and control, based on the drive waveforms, the first switching transistor Q1 to the sixth switching transistor Q6 to be turned on or turned off. Specifically, the controller 410 is configured to: control the first switching transistor Q1 and the second switching transistor Q2 to be alternately turned on, control the third switching transistor Q3 and the fifth switching transistor Q5 to remain on, and control the fourth switching transistor Q4 and the sixth switching transistor Q6 to remain off, for an instantaneous voltage between the bus midpoint H and the alternating current end K to be greater than zero; or control the third switching transistor Q3 and the fourth switching transistor Q4 to be alternately turned on, control the second switching transistor Q2 and the sixth switching transistor Q6 to remain on, and control the first switching transistor Q1 and the fifth switching transistor Q5 to remain off, for an instantaneous voltage between the bus midpoint H and the alternating current end K to be less than zero.

However, the first switching transistor Q1 and the second switching transistor Q2 are used as an example. In a positive half cycle of the modulation wave, an output current of the alternating current end K is greater than zero, and the current flows from the alternating current end K to the power grid or load 300 through the inductor L. When the first switching transistor Q1 and the second switching transistor Q2 are alternately turned on, and when the first switching transistor Q1 is turned off and the second switching transistor Q2 is turned on, the current may flow through the diode D2 reversely connected in parallel to the second switching transistor Q2, and no current may flow through the second switching transistor Q2. A switching loss caused by the controller 410 controlling the second switching transistor Q2 to be turned on and turned off causes a decrease in efficiency of the switching transistor in the ANPC three-level inverter circuit. In addition, if the first switching transistor Q1 fails due to short-circuiting, the controller 410 controls the second switching transistor Q2 to be turned on. As a result, there is a shoot-through short circuit between the positive direct current bus BUS+ and the bus midpoint H through the first switching transistor Q1 and the second switching transistor Q2, resulting in a safety accident and low reliability of the switching transistor in the ANPC three-level inverter circuit.

FIG. 6 is a diagram of a circuit topology of still another power conversion apparatus 400 according to an embodiment of this application. A difference from the power conversion apparatus 400 shown in FIG. 2 or FIG. 4 lies in that the power conversion apparatus 400 shown in FIG. 6 includes a T-shaped three-level inverter circuit. The T-shaped three-level inverter circuit includes a first switching transistor Q1, a second switching transistor Q2, a third switching transistor Q3, and a fourth switching transistor Q4, where the first switching transistor Q1 and the fourth switching transistor Q4 are connected in series between a positive direct current bus BUS+ and a negative direct current bus BUS-, a connection point of the first switching transistor Q1 and the fourth switching transistor Q4 is an alternating current end K of the T-shaped three-level inverter circuit, the alternating current end K is configured to connect to a power grid or load 300, an emitter or a source of the second switching transistor Q2 is connected to the alternating current end K, a collector or a drain of the second switching transistor Q2 is connected to a collector or a drain of the third switching transistor Q3, and an emitter or a source of the third switching transistor Q3 is connected to the bus midpoint H.

In an implementation, positions of the second switching transistor Q2 and the third switching transistor Q3 may be exchanged, the collector or the drain of the third switching transistor Q3 is connected to the alternating current end K, the emitter or the source of the third switching transistor Q3 is connected to the emitter or the source of the second switching transistor Q2, and the collector or the drain of the second switching transistor Q2 is connected to the bus midpoint H.

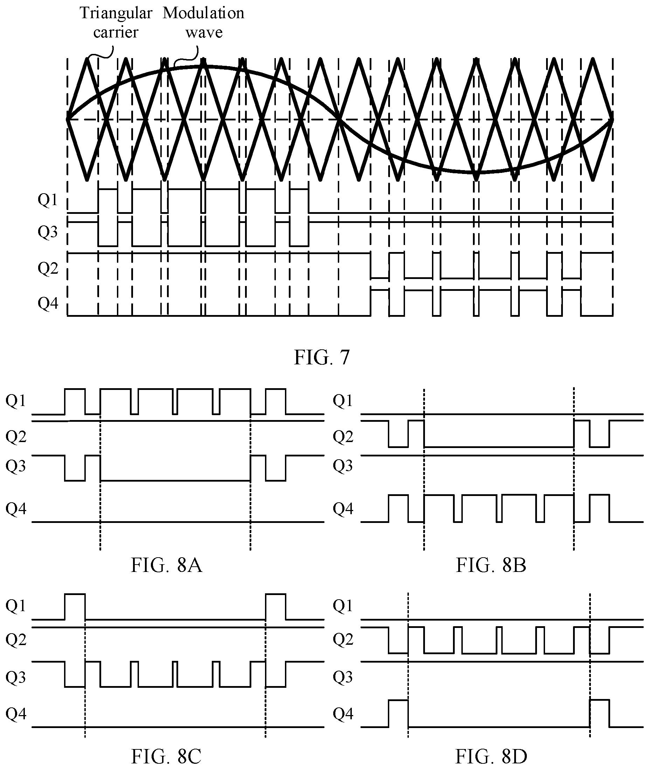

FIG. 7 is a diagram of a drive waveform of the T-shaped three-level inverter circuit according to this embodiment of this application. A controller 410 is configured to: determine drive waveforms of the first switching transistor Q1 to the fourth switching transistor Q4 based on a modulation wave and a triangular carrier, and control, based on the drive waveforms, the first switching transistor Q1 to the fourth switching transistor Q4 to be turned on or turned off. Specifically, the controller 410 is configured to: control the first switching transistor Q1 and the third switching transistor Q3 to be alternately turned on, control the second switching transistor Q2 to remain on, and control the fourth switching transistor Q4 to remain off, for an instantaneous voltage between the bus midpoint H and the alternating current end K to be greater than zero. The controller 410 is further configured to: control the second switching transistor Q2 and the fourth switching transistor Q4 to be alternately turned on, control the third switching transistor Q3 to remain on, and control the first switching transistor Q1 to remain off, for an instantaneous voltage between the bus midpoint H and the alternating current end K to be less than zero.

However, the first switching transistor Q1 and the third switching transistor Q3 are used as an example. In a positive half cycle of the modulation wave, an output current of the alternating current end K is greater than zero, and the current flows from the alternating current end K to the power grid or load 300 through an inductor L. When the first switching transistor Q1 and the third switching transistor Q3 are alternately turned on, and when the first switching transistor Q1 is turned off and the third switching transistor Q3 is turned on, the current may flow through the diode D3 reversely connected in parallel to the third switching transistor Q3 and the diode D4 reversely connected in parallel to the fourth switching transistor Q4, and no current may flow through the third switching transistor Q3. A switching loss caused by the controller 410 controlling the third switching transistor Q3 to be turned on and turned off causes a decrease in efficiency of the switching transistor in the T-shaped three-level inverter circuit. In addition, if the first switching transistor Q1 fails due to short-circuiting, the controller 410 controls the third switching transistor Q3 to be turned on. As a result, there is a shoot-through short circuit between the positive direct current bus BUS+ and the bus midpoint H through the first switching transistor Q1, the second switching transistor Q2, and the third switching transistor, resulting in a safety accident and low reliability of the switching transistor in the T-shaped three-level inverter circuit.

In conclusion, when the controller 410 controls a power conversion circuit in the power conversion apparatus 400, there are problems of low efficiency and poor reliability. In view of this, an embodiment of this application provides a power conversion apparatus. Freewheeling is performed via a diode reversely connected in parallel to a switching transistor. This can reduce a switching loss, improve efficiency of a switching transistor in the power conversion circuit, avoid a short circuit of a positive direct current bus BUS+ or a negative direct current bus BUS-, and improve reliability of the switching transistor in the power conversion circuit.

The power conversion apparatus provided in this embodiment of this application may be an independent device. The power conversion apparatus includes a power conversion circuit. The power conversion circuit may include a three-level inverter circuit, a five-level inverter circuit, or a more-level inverter circuit. This is not limited in embodiments of this application. In this embodiment of this application, an example in which the power conversion apparatus includes a three-level inverter circuit and a circuit topology of the power conversion apparatus is the circuit topology of the power conversion apparatus 400 shown in FIG. 2, FIG. 4, or FIG. 6 is used for description.

The power conversion apparatus 400 provided in this embodiment of this application may be a photovoltaic inverter, and the power conversion apparatus 400 may replace the photovoltaic inverter 110 to be used in the photovoltaic power generation system 100. The power conversion apparatus 400 provided in this embodiment of this application may alternatively be a power conversion system, and the power conversion apparatus 400 may replace the power conversion system 130 to be used in the photovoltaic power generation system 100. The detailed descriptions of the photovoltaic inverter 110 and the power conversion system 130 may be correspondingly introduced to the power conversion apparatus 400. Details are not described in embodiments of this application.

In an implementation, for example, a circuit topology of the power conversion apparatus 400 provided in this embodiment of this application is the circuit topology of the power conversion apparatus 400 shown in FIG. 2.

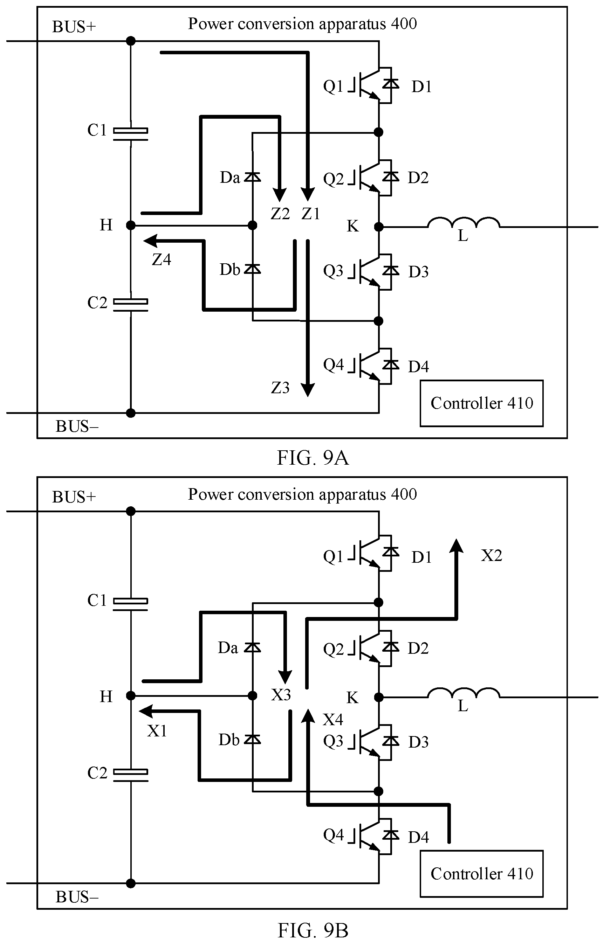

FIG. 8A to FIG. 8D are a diagram of a drive waveform of another DNPC three-level inverter circuit according to this embodiment of this application. FIG. 9A and FIG. 9B are a diagram of a current flow direction in the power conversion apparatus 400 according to this embodiment of this application.

As shown in FIG. 8A to FIG. 8D, when an absolute value of an instantaneous voltage between the bus midpoint H and the alternating current end K is greater than or equal to a voltage threshold and an absolute value of an instantaneous current of the alternating current end K is greater than or equal to a current threshold, the controller 410 determines that the current direction in the power conversion apparatus 400 does not suddenly change as follows.

If the instantaneous voltage is greater than or equal to zero and the instantaneous current is greater than or equal to zero, a current flows from the alternating current end K to the power grid or load 300 through the inductor L. As shown in FIG. 8A, the controller 410 controls the first switching transistor Q1 to be periodically turned on, and controls the third switching transistor Q3 to remain in an off state. When the controller 410 controls the first switching transistor Q1 to be turned on, the current direction in the power conversion apparatus 400 is shown by a broken line Z1 in FIG. 9A, and the current flows from the positive direct current bus BUS+ to the alternating current end K through the first switching transistor Q1 and the second switching transistor Q2. When the controller 410 controls the first switching transistor Q1 to be turned off, the current direction in the power conversion apparatus 400 is shown by a broken line Z2 in FIG. 9A, and the current flows from the bus midpoint H to the alternating current end K through the first diode Da and the second switching transistor Q2 for freewheeling.

Alternatively, if the instantaneous voltage is less than or equal to zero and the instantaneous current is less than or equal to zero, a current flows from the power grid or load 300 to the alternating current end K through the inductor L. As shown in FIG. 8B, the controller 410 controls the fourth switching transistor Q4 to be periodically turned on, and controls the second switching transistor Q2 to remain in an off state. When the controller 410 controls the fourth switching transistor Q4 to be turned on, the current direction in the power conversion apparatus 400 is shown by a broken line Z3 in FIG. 9A, and the current flows from the alternating current end K to the negative direct current bus BUS- through the third switching transistor Q3 and the fourth switching transistor Q4. When the controller 410 controls the fourth switching transistor Q4 to be turned off, the current direction in the power conversion apparatus 400 is shown by a broken line Z4 in FIG. 9D, and the current flows from the alternating current end K to the bus midpoint H through the third switching transistor Q3 and the second diode Db for freewheeling.

Alternatively, if the instantaneous voltage is greater than or equal to zero and the instantaneous current is less than or equal to zero, a current flows from the power grid or load 300 to the alternating current end K through the inductor L. As shown in FIG. 8C, the controller 410 controls the third switching transistor Q3 to be periodically turned on, and controls the first switching transistor Q1 to remain in an off state. When the third switching transistor Q3 is turned on, the current direction in the power conversion apparatus 400 is shown by a broken line X1 in FIG. 9B, and the current flows from the alternating current end K to the bus midpoint H through the third switching transistor Q3 and the second diode Db for freewheeling. When the third switching transistor Q3 is turned off, the current direction in the power conversion apparatus 400 is shown by a broken line X2 in FIG. 9B, and the current flows from the alternating current end K to the positive direct current bus BUS+ through the second switching transistor Q2 and the diode D1 reversely connected in parallel to the first switching transistor Q1. In this case, the power conversion apparatus 400 absorbs energy (which may also be referred to as a reactive power support state), or the power conversion apparatus 400 converts an alternating current provided by the power grid or load 300 into a direct current, to provide the direct current to the energy storage battery 120.

Alternatively, if the instantaneous voltage is less than or equal to zero and the instantaneous current is greater than or equal to zero, a current flows from the alternating current end K to the power grid or load 300 through the inductor L. As shown in FIG. 8D, the controller 410 controls the second switching transistor Q2 to be periodically turned on, and controls the fourth switching transistor Q4 to remain in an off state. When the controller 410 controls the second switching transistor Q2 to be turned on, the current direction in the power conversion apparatus 400 is shown by a broken line X3 in FIG. 9B, and the current flows from the bus midpoint H to the alternating current end K through the first diode Da and the second switching transistor Q2 for freewheeling. When the controller 410 controls the second switching transistor Q2 to be turned off, the current direction in the power conversion apparatus 400 is shown by a broken line X4 in FIG. 9B, and the current flows from the negative direct current bus BUS- to the alternating current end K through the diode D4 reversely connected in parallel to the fourth switching transistor Q4 and the third switching transistor Q3. In this case, the power conversion apparatus 400 absorbs energy (which may also be referred to as a reactive power), or the power conversion apparatus 400 converts an alternating current provided by the power grid or load 300 into a direct current, to provide the direct current to the energy storage battery 120.

In this embodiment of this application, that the instantaneous current of the alternating current end K is greater than zero means that the current flows from the alternating current end K to the power grid or load 300, and that the instantaneous current of the alternating current end K is less than zero means that the current flows from the power grid or load 300 to the alternating current end K.

In an implementation, the voltage threshold in this embodiment of this application is 10% of an absolute value of a peak voltage between the bus midpoint and the alternating current end.

In an implementation, the voltage threshold or the current threshold is positively correlated with at least one of a direct current bus voltage, a total harmonic distortion (THD) of an output current of the DNPC three-level inverter circuit, or an output power of the DNPC three-level inverter circuit. Specific values of the voltage threshold and the current threshold are not limited in embodiments of this application. The total harmonic distortion of the current is a ratio of a total harmonic current effective value to a fundamental current effective value, and is usually represented by a percentage.

In an implementation, the voltage threshold or the current threshold, and the voltage threshold or the current threshold in the following embodiments are positively correlated with a high/low voltage ride-through state. High voltage ride-through (HVRT) means that, when a high voltage fault occurs in a power system, a related device or a power supply can remain connected to a power grid and run normally, is not disconnected from the power grid, and meets a specific performance requirement, to help the power grid restore stable. The high voltage ride-through may also be referred to as high voltage fault ride-through. Low voltage ride-through (LVRT) means that, when a low voltage fault occurs in a power system, a related device or a power supply can remain connected to a power grid and run normally, is not disconnected from the power grid, and meets specific performance requirement, to help the power grid restore stable. The low voltage ride-through may also be referred to as low voltage fault ride-through.

In an implementation, the voltage threshold or the current threshold is negatively correlated with a power factor or efficiency of the DNPC three-level inverter circuit.

In an implementation, the controller 410 is further configured to:
as shown in FIG. 8A and FIG. 9A, after controlling the first switching transistor Q1 to be periodically turned on, if the first switching transistor Q1 is short-circuited, control the third switching transistor Q3 to remain in the off state, so as to avoid a shoot-through short circuit between the positive direct current bus BUS+ and the bus midpoint H through the first switching transistor Q1, the second switching transistor Q2, the third switching transistor Q3, and the second diode Db, thereby improving reliability of the switching transistor in the DNPC three-level inverter circuit; and further control the remaining switching transistor to remain in a state during short-circuiting of the first switching transistor Q1; or
as shown in FIG. 8B and FIG. 9A, after controlling the fourth switching transistor Q4 to be periodically turned on, if the fourth switching transistor Q4 is short-circuited, control the second switching transistor Q2 to remain in the off state, so as to avoid a shoot-through short circuit between the bus midpoint H and the negative direct current bus BUS- through the first diode Da, the second switching transistor Q2, the third switching transistor Q3, and the fourth switching transistor Q4, thereby improving reliability of the switching transistor in the DNPC three-level inverter circuit; and further control the remaining switching transistor to remain in a state during short-circuiting of the fourth switching transistor Q4; or
as shown in FIG. 8C and FIG. 9B, after controlling the third switching transistor Q3 to be periodically turned on, if the third switching transistor Q3 is short-circuited, control the first switching transistor Q1 to remain in the off state, so as to avoid a shoot-through short circuit between the positive direct current bus BUS+ and the bus midpoint H through the first switching transistor Q1, the second switching transistor Q2, the third switching transistor Q3, and the second diode Db, thereby improving reliability of the switching transistor in the DNPC three-level inverter circuit; and further control the remaining switching transistor to remain in a state during short-circuiting of the third switching transistor Q3; or
as shown in FIG. 8D and FIG. 9B, after controlling the second switching transistor Q2 to be periodically turned on, if the second switching transistor Q2 is short-circuited, control the fourth switching transistor Q4 to remain in the off state, so as to avoid a shoot-through short circuit between the bus midpoint H and the negative direct current bus BUS- through the first diode Da, the second switching transistor Q2, the third switching transistor Q3, and the fourth switching transistor Q4, thereby improving reliability of the switching transistor in the DNPC three-level inverter circuit; and further control the remaining switching transistor to remain in a state during short-circuiting of the second switching transistor Q2.

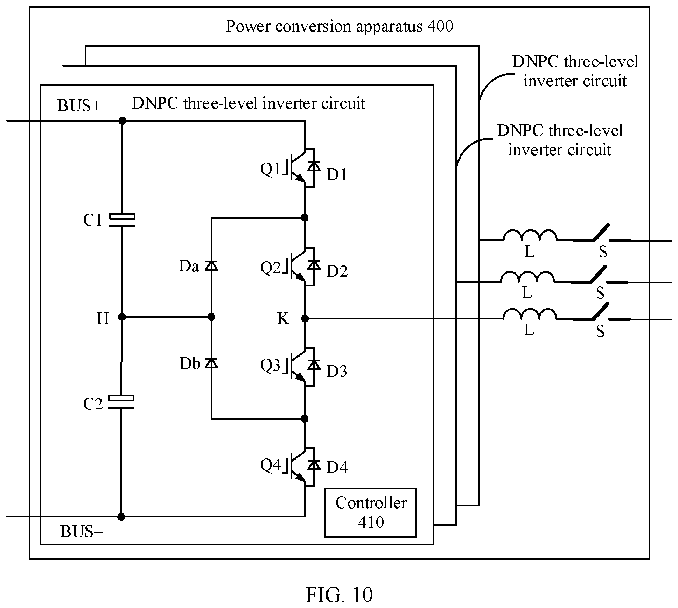

In an implementation, as shown in FIG. 2, for example, the power conversion apparatus 400 includes the DNPC three-level inverter circuit. FIG. 10 is a diagram of a circuit topology of yet another power conversion apparatus 400 according to an embodiment of this application. The power conversion apparatus 400 includes three DNPC three-level inverter circuits and three switches S. One end of each of the three switches S is connected to a second end of each of three inductors L, and the other end of each of the three switches S is connected to a three-phase alternating current end of the power grid or load 300.

The controller 410 is further configured to: after controlling switching transistors in any DNPC three-level inverter circuit to be periodically turned on, if the periodically turned-on switching transistors are short-circuited, control all switching transistors in the remaining DNPC three-level inverter circuits to be turned off, and control all switches S corresponding to the remaining DNPC three-level inverter circuits to be turned off, thereby improving reliability of the switching transistor in the DNPC three-level inverter circuit.

For example, as shown in FIG. 8A, the controller 410 controls the first switching transistor Q1 to be periodically turned on, and controls the third switching transistor Q3 to remain in the off state. The controller 410 is further configured to: after controlling a first switching transistor Q1 in any DNPC three-level inverter circuit to be periodically turned on, if the first switching transistor Q1 is short-circuited, control a third switching transistor Q3 to remain in an off state, control all switching transistors in the remaining DNPC three-level inverter circuits to be turned off, and control all switches K corresponding to the remaining DNPC three-level inverter circuits to be turned off.

Refer to the drive waveform of the DNPC three-level inverter circuit shown in FIG. 3. The controller 410 determines a drive waveform based on a modulation wave and a triangular carrier, and then controls the DNPC three-level inverter circuit based on the drive waveform. Because a current of the alternating current end K of the DNPC three-level inverter circuit has a ripple, zero crossing may occur a plurality of times in the current of the alternating current end K near a switching point of a positive half cycle and a negative half cycle of the modulation wave or near a switching point of a negative half cycle and a positive half cycle of the modulation wave, and a direction of the current of the alternating current end K may change a plurality of times. In this process, both an absolute value of an instantaneous voltage between the bus midpoint H and the alternating current end K and an absolute value of an instantaneous current of the alternating current end are small. In the power conversion apparatus 400 provided in this embodiment of this application, relative to a drive manner of the DNPC three-level inverter circuit shown in FIG. 3, as shown in FIG. 8A to FIG. 8D, the first switching transistor Q1 and the second switching transistor Q2 are used as an example. When the absolute value of the instantaneous voltage between the bus midpoint H and the alternating current end K is greater than or equal to a voltage threshold, the absolute value of the instantaneous current of the alternating current end K is greater than or equal to a current threshold, and the controller 410 determines that a current direction in the power conversion circuit does not suddenly change, if the instantaneous voltage is greater than or equal to zero and the instantaneous current is greater than or equal to zero, the power conversion circuit is in an inversion working state, and a current flows from the alternating current end K to the power grid or load 300 through the inductor L. The controller 410 controls the first switching transistor Q1 to be periodically turned on, and controls the third switching transistor Q3 to remain in an off state. When the first switching transistor Q1 is turned off, freewheeling is performed via the first diode Da and the second switching transistor Q2. This can reduce a switching loss caused by the controller 410 controlling the third switching transistor Q3 to be turned on and turned off, and improve efficiency of the switching transistor in the power conversion circuit. In addition, if the first switching transistor Q1 is short-circuited, because the controller 410 controls the third switching transistor Q3 to remain in the off state, there is no shoot-through short circuit between the positive direct current bus BUS+ and the bus midpoint H. This can improve reliability of the switching transistor in the power conversion circuit. In addition, when the instantaneous voltage between the bus midpoint H and the alternating current end K is less than the voltage threshold and the absolute value of the instantaneous current of the alternating current end K is less than the current threshold, the controller 410 does not control the third switching transistor Q3 to be turned off. Therefore, when the current direction in the power conversion apparatus 400 suddenly changes from the power grid or load 300 to the alternating current end K through the inductor L, and the power conversion circuit is in a rectification working state or in a reactive power support state, the current may flow from the alternating current end K to the bus midpoint H through the third switching transistor Q3, and the current in the power conversion circuit is not distorted.

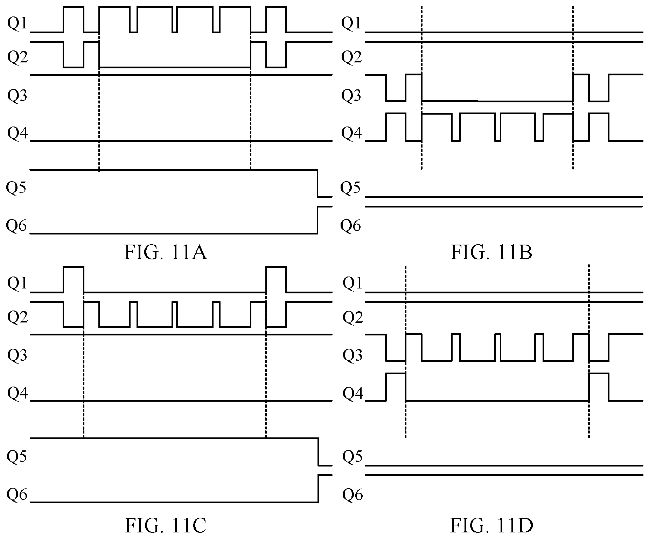

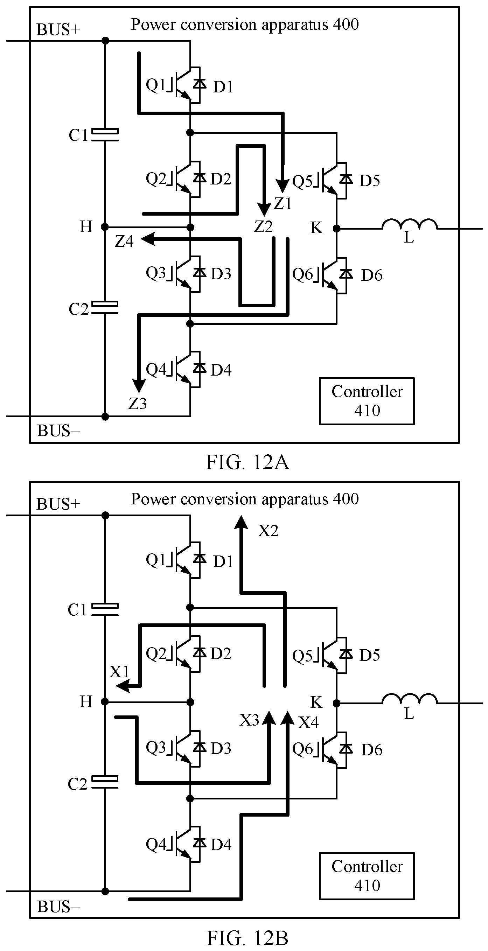

In an implementation, for example, a circuit topology of the power conversion apparatus 400 provided in this embodiment of this application is the circuit topology of the power conversion apparatus 400 shown in FIG. 4. FIG. 11A to FIG. 11D are a diagram of a drive waveform of another ANPC three-level inverter circuit according to this embodiment of this application. FIG. 12A and FIG. 12B are a diagram of another current flow direction in the power conversion apparatus 400 according to this embodiment of this application.

As shown in FIG. 11A to FIG. 11D, when the absolute value of the instantaneous voltage between the bus midpoint H and the alternating current end K is greater than or equal to the voltage threshold and the absolute value of the instantaneous current of the alternating current end K is greater than or equal to the current threshold, the controller 410 determines that the current direction in the power conversion apparatus 400 does not suddenly change as follows.

If the instantaneous voltage is greater than or equal to zero and the instantaneous current is greater than or equal to zero, the current flows from the alternating current end K to the power grid or load 300 through the inductor L, and the ANPC three-level inverter circuit is in an inversion working state. As shown in FIG. 11A, the controller 410 controls the first switching transistor Q1 to be periodically turned on, and controls the second switching transistor Q2 to remain in an off state. When the controller 410 controls the first switching transistor Q1 to be turned on, the current direction in the power conversion apparatus 400 is shown by a broken line Z1 in FIG. 12A, and the current flows from the positive direct current bus BUS+ to the alternating current end K through the first switching transistor Q1 and the fifth switching transistor Q5. When the controller 410 controls the first switching transistor Q1 to be turned off, the current direction in the power conversion apparatus 400 is shown by a broken line Z2 in FIG. 12A, and the current flows from the bus midpoint H to the alternating current end K through the diode D2 reversely connected in parallel to the second switching transistor Q2 and the fifth switching transistor Q5 for freewheeling.

Alternatively, if the instantaneous voltage is less than or equal to zero and the instantaneous current is less than or equal to zero, the current flows from the power grid or load 300 to the alternating current end K through the inductor L, and the ANPC three-level inverter circuit is in an inversion working state. As shown in FIG. 11B, the controller 410 controls the fourth switching transistor Q4 to be periodically turned on, and controls the third switching transistor Q3 to remain in an off state. When the controller 410 controls the fourth switching transistor Q4 to be turned on, the current direction in the power conversion apparatus 400 is shown by a broken line Z3 in FIG. 12A, and the current flows from the alternating current end K to the negative direct current bus BUS- through the sixth switching transistor Q6 and the fourth switching transistor Q4. When the controller 410 controls the fourth switching transistor Q4 to be turned off, the current direction in the power conversion apparatus 400 is shown by a broken line Z4 in FIG. 12A, and the current flows from the alternating current end K to the bus midpoint H through the sixth switching transistor Q6 and the diode D3 reversely connected in parallel to the third switching transistor Q3 for freewheeling.

Alternatively, if the instantaneous voltage is greater than or equal to zero and the instantaneous current is less than or equal to zero, the current flows from the power grid or load 300 to the alternating current end K through the inductor L, and the ANPC three-level inverter circuit is in a rectification working state or in a reactive power support state. As shown in FIG. 11C, the controller 410 controls the second switching transistor Q2 to be periodically turned on, and controls the first switching transistor Q1 to remain in an off state. When the controller 410 controls the second switching transistor Q2 to be turned on, the current direction in the power conversion apparatus 400 is shown by a broken line X1 in FIG. 12B, and the current flows from the alternating current end K to the bus midpoint H through the fifth switching transistor Q5 and the second switching transistor Q2 for freewheeling. When the controller 410 controls the second switching transistor Q2 to be turned off, the current direction in the power conversion apparatus 400 is shown by a broken line X2 in FIG. 12B, and the current flows from the alternating current end K to the positive direct current bus BUS+ through the fifth switching transistor Q5 and the diode D1 reversely connected in parallel to the first switching transistor Q1.

Alternatively, if the instantaneous voltage is less than or equal to zero and the instantaneous current is greater than or equal to zero, the current flows from the alternating current end K to the power grid or load 300 through the inductor L, and the ANPC three-level inverter circuit is in a rectification working state or in a reactive power support state. As shown in FIG. 11D, the controller 410 controls the third switching transistor Q3 to be periodically turned on, and controls the fourth switching transistor Q4 to remain in an off state. When the controller 410 controls the third switching transistor Q3 to be turned on, the current direction in the power conversion apparatus 400 is shown by a broken line X3 in FIG. 12B, and the current flows from the bus midpoint H to the alternating current end K through the third switching transistor Q3 and the sixth switching transistor Q6 for freewheeling. When the controller 410 controls the third switching transistor Q3 to be turned off, the current direction in the power conversion apparatus 400 is shown by a broken line X4 in FIG. 12B, and the current flows from the negative direct current bus BUS- to the alternating current end K through the diode D4 reversely connected in parallel to the fourth switching transistor Q4 and the sixth switching transistor Q6.

In an implementation, a positive/negative direction and a magnitude of a voltage between the bus midpoint H and the alternating current end K may indicate a positive/negative direction and a magnitude of the modulation wave, and the voltage threshold or the current threshold is positively correlated with at least one of a direct current bus voltage, a total harmonic distortion of an output current of the ANPC three-level inverter circuit, or an output power of the ANPC three-level inverter circuit. The direct current bus voltage is a voltage between the positive direct current bus BUS+ and the negative direct current bus BUS-. Specific values of the voltage threshold and the current threshold are not limited in embodiments of this application.

In an implementation, the voltage threshold or the current threshold is negatively correlated with a power factor or efficiency of the ANPC three-level inverter circuit.

In an implementation, the controller 410 is further configured to:
as shown in FIG. 11A and FIG. 12A, after controlling the first switching transistor Q1 to be periodically turned on, if the first switching transistor Q1 is short-circuited, control the second switching transistor Q2 to remain in the off state, so as to avoid a shoot-through short circuit between the positive direct current bus BUS+ and the bus midpoint H through the first switching transistor Q1 and the second switching transistor Q2, thereby improving reliability of the switching transistor in the ANPC three-level inverter circuit; and further control the remaining switching transistor to remain in a state during short-circuiting of the first switching transistor Q1; or
as shown in FIG. 11B and FIG. 12A, after controlling the fourth switching transistor Q4 to be periodically turned on, if the fourth switching transistor Q4 is short-circuited, control the third switching transistor Q3 to remain in the off state, so as to avoid a shoot-through short circuit between the bus midpoint H and the negative direct current bus BUS- through the third switching transistor Q3 and the fourth switching transistor Q4, thereby improving reliability of the switching transistor in the ANPC three-level inverter circuit; and further control the remaining switching transistor to remain in a state during short-circuiting of the fourth switching transistor Q4; or
as shown in FIG. 11C and FIG. 12B, after controlling the second switching transistor Q2 to be periodically turned on, if the second switching transistor Q2 is short-circuited, control the first switching transistor Q1 to remain in the off state, so as to avoid a shoot-through short circuit between the positive direct current bus BUS+ and the bus midpoint H through the first switching transistor Q1 and the second switching transistor Q2, thereby improving reliability of the switching transistor in the ANPC three-level inverter circuit; and further control the remaining switching transistor to remain in a state during short-circuiting of the second switching transistor Q2; or
as shown in FIG. 11D and FIG. 12B, after controlling the third switching transistor Q3 to be periodically turned on, if the third switching transistor Q3 is short-circuited, control the fourth switching transistor Q4 to remain in the off state, so as to avoid a shoot-through short circuit between the bus midpoint H and the negative direct current bus BUS- through the third switching transistor Q3 and the fourth switching transistor Q4, thereby improving reliability of the switching transistor in the ANPC three-level inverter circuit; and further control the remaining switching transistor to remain in a state during short-circuiting of the third switching transistor Q3.

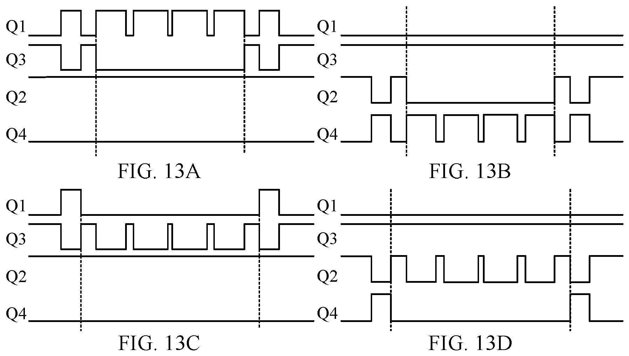

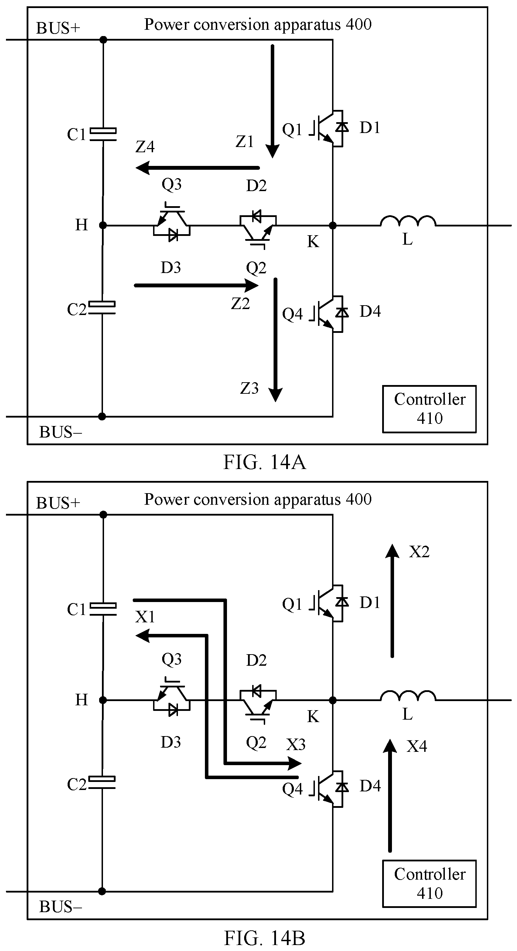

In an implementation, for example, a circuit topology of the power conversion apparatus 400 provided in this embodiment of this application is the circuit topology of the power conversion apparatus 400 shown in FIG. 6. FIG. 13A to FIG. 13D are a diagram of a drive waveform of another T-shaped three-level inverter circuit according to this embodiment of this application. FIG. 14A and FIG. 14B are a diagram of still another current flow direction in the power conversion apparatus 400 according to this embodiment of this application.

As shown in FIG. 13A to FIG. 13D, when an absolute value of an instantaneous voltage between the bus midpoint H and the alternating current end K is greater than or equal to a voltage threshold and an absolute value of an instantaneous current of the alternating current end K is greater than or equal to a current threshold, the controller 410 determines that the current direction in the power conversion apparatus 400 does not suddenly change as follows.

If the instantaneous voltage is greater than or equal to zero and the instantaneous current is greater than or equal to zero, the current flows from the alternating current end K to the power grid or load 300 through the inductor L. As shown in FIG. 13A, the controller 410 controls the first switching transistor Q1 to be periodically turned on, and controls the third switching transistor Q3 to remain in an off state. When the controller 410 controls the first switching transistor Q1 to be turned on, the current direction in the power conversion apparatus 400 is shown by a broken line Z1 in FIG. 14A, and the current flows from the positive direct current bus BUS+ to the alternating current end K through the first switching transistor Q1. When the controller 410 controls the first switching transistor Q1 to be turned off, the current direction in the power conversion apparatus 400 is shown by a broken line Z2 in FIG. 14A, and the current flows from the bus midpoint H to the alternating current end K through the diode D3 reversely connected in parallel to the third switching transistor Q3 and the second switching transistor Q2 for freewheeling.

Alternatively, if the instantaneous voltage is less than or equal to zero and the instantaneous current is less than or equal to zero, the current flows from the power grid or load 300 to the alternating current end K through the inductor L. As shown in FIG. 13B, the controller 410 controls the fourth switching transistor Q4 to be periodically turned on, and controls the second switching transistor Q2 to remain in an off state. When the controller 410 controls the fourth switching transistor Q4 to be turned on, the current direction in the power conversion apparatus 400 is shown by a broken line Z3 in FIG. 14A, and the current flows from the alternating current end K to the negative direct current bus BUS- through the fourth switching transistor Q4. When the controller 410 controls the fourth switching transistor Q4 to be turned off, the current direction in the power conversion apparatus 400 is shown by a broken line Z4 in FIG. 14A, and the current flows from the alternating current end K to the bus midpoint H through the diode D2 reversely connected in parallel to the second switching transistor Q2 and the third switching transistor Q3 for freewheeling.

Alternatively, if the instantaneous voltage is greater than or equal to zero and the instantaneous current is less than or equal to zero, the current flows from the power grid or load 300 to the alternating current end K through the inductor L. As shown in FIG. 13C, the controller 410 controls the third switching transistor Q3 to be periodically turned on, and controls the first switching transistor Q1 to remain in an off state. When the controller 410 controls the third switching transistor Q3 to be turned on, the current direction in the power conversion apparatus 400 is shown by a broken line X1 in FIG. 14B, and the current flows from the alternating current end K to the bus midpoint H through the second switching transistor Q2 and the third switching transistor Q3 for freewheeling. When the controller 410 controls the third switching transistor Q3 to be turned off, the current direction in the power conversion apparatus 400 is shown by a broken line X2 in FIG. 14B, and the current flows from the alternating current end K to the positive direct current bus BUS+ through the diode D1 reversely connected in parallel to the first switching transistor Q1.

Alternatively, if the instantaneous voltage is less than or equal to zero and the instantaneous current is greater than or equal to zero, the current flows from the alternating current end K to the power grid or load 300 through the inductor L. As shown inn FIG. 13D, the controller 410 controls the second switching transistor Q2 to be periodically turned on, and controls the fourth switching transistor Q4 to remain in an off state. When the controller 410 controls the second switching transistor Q2 to be turned on, the current direction in the power conversion apparatus 400 is shown by a broken line X3 in FIG. 14B, and the current flows from the bus midpoint H to the alternating current end K through the third switching transistor Q3 and the second switching transistor Q2 for freewheeling. When the controller 410 controls the second switching transistor Q2 to be turned off, the current direction in the power conversion apparatus 400 is shown by a broken line X4 in FIG. 14B, and the current flows from the negative direct current bus BUS- to the alternating current end K through the diode D4 reversely connected in parallel to the fourth switching transistor Q4.

In an implementation, the voltage threshold or the current threshold is positively correlated with at least one of a direct current bus voltage, a total harmonic distortion of an output current of the T-shaped three-level inverter circuit, or an output power of the T-shaped three-level inverter circuit. Specific values of the voltage threshold and the current threshold are not limited in embodiments of this application.

In an implementation, the voltage threshold or the current threshold is negatively correlated with a power factor or efficiency of the T-shaped three-level inverter circuit.

In an implementation, the controller 410 is further configured to:
as shown in FIG. 13A and in FIG. 14A, after controlling the first switching transistor Q1 to be periodically turned on, if the first switching transistor Q1 is short-circuited, control the third switching transistor Q3 to remain in the off state, so as to avoid a shoot-through short circuit between the positive direct current bus BUS+ and the bus midpoint H through the first switching transistor Q1, the second switching transistor Q2, and the third switching transistor Q3, thereby improving reliability of the switching transistor in the T-shaped three-level inverter circuit; and further control the remaining switching transistor to remain in a state during short-circuiting of the first switching transistor Q1; or
as shown in FIG. 13B and FIG. 14A, after controlling the fourth switching transistor Q4 to be periodically turned on, if the fourth switching transistor Q4 is short-circuited, control the second switching transistor Q2 to remain in the off state, so as to avoid a shoot-through short circuit between the bus midpoint H and the negative direct current bus BUS- through the third switching transistor Q3, the second switching transistor Q2, and the fourth switching transistor Q4, thereby improving reliability of the switching transistor in the T-shaped three-level inverter circuit; and further control the remaining switching transistor to remain in a state during short-circuiting of the fourth switching transistor Q4; or
as shown in FIG. 13C and FIG. 14B, after controlling the third switching transistor Q3 to be periodically turned on, if the third switching transistor Q3 is short-circuited, control the first switching transistor Q1 to remain in the off state, so as to avoid a shoot-through short circuit between the positive direct current bus BUS+ and the bus midpoint H through the first switching transistor Q1, the second switching transistor Q2, and the third switching transistor Q3, thereby improving reliability of the switching transistor in the T-shaped three-level inverter circuit; and further control the remaining switching transistor to remain in a state during short-circuiting of the third switching transistor Q3; or
as shown in FIG. 13D and FIG. 14B, after controlling the second switching transistor Q2 to be periodically turned on, if the second switching transistor Q2 is short-circuited, control the fourth switching transistor Q4 to remain in the off state, so as to avoid a shoot-through short circuit between the bus midpoint H and the negative direct current bus through the third switching transistor Q3, the second switching transistor Q2, and the fourth switching transistor Q4, thereby improving reliability of the switching transistor in the T-shaped three-level inverter circuit; and further control the remaining switching transistor to remain in a state during short-circuiting of the second switching transistor Q2.

In view of this, as shown in FIG. 1, an embodiment of this application further provides a photovoltaic power generation system 100. The photovoltaic power generation system 100 includes a photovoltaic inverter 110. A direct current side of the photovoltaic inverter 110 is configured to connect to a photovoltaic module 200, and an alternating current side of the photovoltaic inverter 110 is configured to connect to a power grid or load 300. A circuit topology of the photovoltaic inverter 110 is the circuit topology of the power conversion apparatus 400 shown in any one of FIG. 2, FIG. 4, FIG. 6, FIG. 9A, FIG. 9B, FIG. 10, FIG. 12A, FIG. 12B, FIG. 14A, or FIG. 14B.

In an implementation, as shown in FIG. 1, the photovoltaic power generation system 100 may further include an energy storage battery 120 and a power conversion system 130. An electrode of the energy storage battery 120 is connected to a direct current side of the power conversion system 130, and an alternating current side of the power conversion system 130 is connected to the alternating current side of the photovoltaic inverter 110.

The detailed descriptions and beneficial effect analysis of the power conversion apparatus 400 may be correspondingly introduced to the photovoltaic power generation system 100 shown in FIG. 1. Details are not described in embodiments of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A power conversion apparatus, comprising:
a positive direct current bus and a negative direct current bus;
a positive bus capacitor and a negative bus capacitor, wherein the positive bus capacitor and the negative bus capacitor are connected in series between the positive direct current bus and the negative direct current bus, and a series connection point of the positive bus capacitor and the negative bus capacitor is a bus midpoint;
a power conversion circuit, comprising a first switching transistor, a second switching transistor, a third switching transistor, a fourth switching transistor, a first diode, and a second diode, wherein the first switching transistor, the second switching transistor, the third switching transistor, and the fourth switching transistor are connected in series between the positive direct current bus and the negative direct current bus, a cathode of the first diode is connected to a series connection point of the first switching transistor and the second switching transistor, an anode of the second diode is connected to a series connection point of the third switching transistor and the fourth switching transistor, an anode of the first diode and a cathode of the second diode are connected to the bus midpoint, a series connection point of the second switching transistor and the third switching transistor is an alternating current end of the power conversion circuit, the alternating current end is configured to connect to a power grid or load, and the power conversion circuit is configured to convert a direct current output by a photovoltaic module or an energy storage battery into an alternating current; and
a controller, configured to: control the first switching transistor and the third switching transistor to be alternately turned on, control the second switching transistor to remain on, and control the fourth switching transistor to remain off, for an instantaneous voltage between the bus midpoint and the alternating current end to be greater than zero; or control the second switching transistor and the fourth switching transistor to be alternately turned on, control the third switching transistor to remain on, and control the first switching transistor to remain off, for an instantaneous voltage between the bus midpoint and the alternating current end to be less than zero, wherein
the controller is further configured to: when an absolute value of the instantaneous voltage between the bus midpoint and the alternating current end is greater than or equal to a voltage threshold and an absolute value of an instantaneous current of the alternating current end is greater than or equal to a current threshold,
if the instantaneous voltage is greater than or equal to zero and the instantaneous current is greater than or equal to zero, control the first switching transistor to be periodically turned on, and control the third switching transistor to remain in an off state; or
if the instantaneous voltage is less than or equal to zero and the instantaneous current is less than or equal to zero, control the fourth switching transistor to be periodically turned on, and control the second switching transistor to remain in an off state; or
if the instantaneous voltage is greater than or equal to zero and the instantaneous current is less than or equal to zero, control the third switching transistor to be periodically turned on, and control the first switching transistor to remain in an off state; or
if the instantaneous voltage is less than or equal to zero and the instantaneous current is greater than or equal to zero, control the second switching transistor to be periodically turned on, and control the fourth switching transistor to remain in an off state, wherein
that the instantaneous current of the alternating current end is greater than zero means that a current flows from the alternating current end to the power grid or load, and that the instantaneous current of the alternating current end is less than zero means that the current flows from the power grid or load to the alternating current end.

2. The power conversion apparatus according to claim 1, wherein
the voltage threshold is 10% of an absolute value of a peak voltage between the bus midpoint and the alternating current end.

3. The power conversion apparatus according to claim 1 or 2, wherein
the voltage threshold or the current threshold is positively correlated with at least one of a direct current bus voltage, a total harmonic distortion of an output current of the power conversion circuit, or an output power of the power conversion circuit, and the direct current bus voltage is a voltage between the positive direct current bus and the negative direct current bus.

4. The power conversion apparatus according to any one of claims 1 to 3, wherein
the voltage threshold or the current threshold is negatively correlated with a power factor or efficiency of the power conversion circuit.

5. The power conversion apparatus according to any one of claims 1 to 4, wherein
the controller is further configured to:
after controlling the first switching transistor to be periodically turned on, if the first switching transistor is short-circuited, control the third switching transistor to remain in the off state; or
after controlling the fourth switching transistor to be periodically turned on, if the fourth switching transistor is short-circuited, control the second switching transistor to remain in the off state; or
after controlling the third switching transistor to be periodically turned on, if the third switching transistor is short-circuited, control the first switching transistor to remain in the off state; or
after controlling the second switching transistor to be periodically turned on, if the second switching transistor is short-circuited, control the fourth switching transistor to remain in the off state.

6. A power conversion apparatus, comprising:
a positive direct current bus and a negative direct current bus;
a positive bus capacitor and a negative bus capacitor, wherein the positive bus capacitor and the negative bus capacitor are connected in series between the positive direct current bus and the negative direct current bus, and a series connection point of the positive bus capacitor and the negative bus capacitor is a bus midpoint;
a power conversion circuit, comprising a first switching transistor, a second switching transistor, a third switching transistor, a fourth switching transistor, a fifth switching transistor, and a sixth switching transistor, wherein the first switching transistor and the second switching transistor are connected in series between the positive direct current bus and the bus midpoint, the third switching transistor and the fourth switching transistor are connected in series between the bus midpoint and the negative direct current bus, the fifth switching transistor and the sixth switching transistor are connected in series between a series connection point of the first switching transistor and the second switching transistor and a series connection point of the third switching transistor and the fourth switching transistor, a series connection point of the second switching transistor and the third switching transistor is connected to the bus midpoint, a series connection point of the fifth switching transistor and the sixth switching transistor is an alternating current end of the power conversion circuit, the alternating current end is configured to connect to a power grid or load, and the power conversion circuit is configured to convert a direct current output by a photovoltaic module or an energy storage battery into an alternating current; and
a controller, configured to: control the first switching transistor and the second switching transistor to be alternately turned on, control the third switching transistor and the fifth switching transistor to remain on, and control the fourth switching transistor and the sixth switching transistor to remain off, for an instantaneous voltage between the bus midpoint and the alternating current end to be greater than zero; or control the third switching transistor and the fourth switching transistor to be alternately turned on, control the second switching transistor and the sixth switching transistor to remain on, and control the first switching transistor and the fifth switching transistor to remain off, for an instantaneous voltage between the bus midpoint and the alternating current end to be less than zero, wherein
the controller is further configured to: when an absolute value of the instantaneous voltage between the bus midpoint and the alternating current end is greater than or equal to a voltage threshold and an absolute value of an instantaneous current of the alternating current end is greater than or equal to a current threshold,
if the instantaneous voltage is greater than or equal to zero and the instantaneous current is greater than or equal to zero, control the first switching transistor to be periodically turned on, and control the second switching transistor to remain in an off state; or
if the instantaneous voltage is less than or equal to zero and the instantaneous current is less than or equal to zero, control the fourth switching transistor to be periodically turned on, and control the third switching transistor to remain in an off state; or
if the instantaneous voltage is greater than or equal to zero and the instantaneous current is less than or equal to zero, control the second switching transistor to be periodically turned on, and control the first switching transistor to remain in an off state; or
if the instantaneous voltage is less than or equal to zero and the instantaneous current is greater than or equal to zero, control the third switching transistor to be periodically turned on, and control the fourth switching transistor to remain in an off state, wherein
that the instantaneous current of the alternating current end is greater than zero means that a current flows from the alternating current end to the power grid or load, and that the instantaneous current of the alternating current end is less than zero means that the current flows from the power grid or load to the alternating current end.

7. The power conversion apparatus according to claim 6, wherein
the voltage threshold is 10% of an absolute value of a peak voltage between the bus midpoint and the alternating current end.

8. The power conversion apparatus according to claim 6 or 7, wherein
the voltage threshold or the current threshold is positively correlated with at least one of a direct current bus voltage, a total harmonic distortion of an output current of the power conversion circuit, or an output power of the power conversion circuit, and the direct current bus voltage is a voltage between the positive direct current bus and the negative direct current bus.

9. The power conversion apparatus according to any one of claims 6 to 8, wherein
the voltage threshold or the current threshold is negatively correlated with a power factor or efficiency of the power conversion circuit.

10. The power conversion apparatus according to any one of claims 6 to 9, wherein
the controller is further configured to:
after controlling the first switching transistor to be periodically turned on, if the first switching transistor is short-circuited, control the second switching transistor to remain in the off state; or
after controlling the fourth switching transistor to be periodically turned on, if the fourth switching transistor is short-circuited, control the third switching transistor to remain in the off state; or
after controlling the second switching transistor to be periodically turned on, if the second switching transistor is short-circuited, control the first switching transistor to remain in the off state; or
after controlling the third switching transistor to be periodically turned on, if the third switching transistor is short-circuited, control the fourth switching transistor to remain in the off state.

11. A power conversion apparatus, comprising:
a positive direct current bus and a negative direct current bus;
a positive bus capacitor and a negative bus capacitor, wherein the positive bus capacitor and the negative bus capacitor are connected in series between the positive direct current bus and the negative direct current bus, and a series connection point of the positive bus capacitor and the negative bus capacitor is a bus midpoint;
a power conversion circuit, comprising a first switching transistor, a second switching transistor, a third switching transistor, and a fourth switching transistor, wherein the first switching transistor and the fourth switching transistor are connected in series between the positive direct current bus and the negative direct current bus, a connection point of the first switching transistor and the fourth switching transistor is an alternating current end of the power conversion circuit, the alternating current end is configured to connect to a power grid or load, an emitter or a source of the second switching transistor is connected to the alternating current end, a collector or a drain of the second switching transistor is connected to a collector or a drain of the third switching transistor, and an emitter or a source of the third switching transistor is connected to the bus midpoint; and
a controller, configured to: control the first switching transistor and the third switching transistor to be alternately turned on, control the second switching transistor to remain on, and control the fourth switching transistor to remain off, for an instantaneous voltage between the bus midpoint and the alternating current end to be greater than zero; or control the second switching transistor and the fourth switching transistor to be alternately turned on, control the third switching transistor to remain on, and control the first switching transistor to remain off, for an instantaneous voltage between the bus midpoint and the alternating current end to be less than zero; and the power conversion circuit is configured to convert a direct current output by a photovoltaic module or an energy storage battery into an alternating current, wherein
the controller is further configured to: when an absolute value of the instantaneous voltage between the bus midpoint and the alternating current end is greater than or equal to a voltage threshold and an absolute value of an instantaneous current of the alternating current end is greater than or equal to a current threshold,
if the instantaneous voltage is greater than or equal to zero and the instantaneous current is greater than or equal to zero, control the first switching transistor to be periodically turned on, and control the third switching transistor to remain in an off state; or
if the instantaneous voltage is less than or equal to zero and the instantaneous current is less than or equal to zero, control the fourth switching transistor to be periodically turned on, and control the second switching transistor to remain in an off state; or
if the instantaneous voltage is greater than or equal to zero and the instantaneous current is less than or equal to zero, control the third switching transistor to be periodically turned on, and control the first switching transistor to remain in an off state; or
if the instantaneous voltage is less than or equal to zero and the instantaneous current is greater than or equal to zero, control the second switching transistor to be periodically turned on, and control the fourth switching transistor to remain in an off state, wherein
that the instantaneous current of the alternating current end is greater than zero means that a current flows from the alternating current end to the power grid or load, and that the instantaneous current of the alternating current end is less than zero means that the current flows from the power grid or load to the alternating current end.

12. The power conversion apparatus according to claim 11, wherein
the voltage threshold is 10% of an absolute value of a peak voltage between the bus midpoint and the alternating current end.

13. The power conversion apparatus according to claim 11 or 12, wherein
the voltage threshold or the current threshold is positively correlated with at least one of a direct current bus voltage, a total harmonic distortion of an output current of the power conversion circuit, or an output power of the power conversion circuit, and the direct current bus voltage is a voltage between the positive direct current bus and the negative direct current bus.

14. The power conversion apparatus according to any one of claims 11 to 13, wherein
the voltage threshold or the current threshold is negatively correlated with a power factor or efficiency of the power conversion circuit.

15. The power conversion apparatus according to any one of claims 11 to 14, wherein
the controller is further configured to:
after controlling the first switching transistor to be periodically turned on, if the first switching transistor is short-circuited, control the third switching transistor to remain in the off state; or
after controlling the fourth switching transistor to be periodically turned on, if the fourth switching transistor is short-circuited, control the second switching transistor to remain in the off state; or
after controlling the third switching transistor to be periodically turned on, if the third switching transistor is short-circuited, control the first switching transistor to remain in the off state; or
after controlling the second switching transistor to be periodically turned on, if the second switching transistor is short-circuited, control the fourth switching transistor to remain in the off state.
